# EUROPEAN PATENT APPLICATION

(11) **EP 3 247 119 A1**
(43) Date of publication of application: **22.11.2017**
(21) Application number: 17159777.6
(22) Date of filing: 08.03.2017
(51) Int. Cl.: H04N 21/234, H04N 21/24

(54) **MEDIA SYSTEM AND METHOD FOR IMPLEMENTING VARIOUS MODES USING FORCE INPUT**

(30) Priority: 16.05.2016 KR 20160059490
(71) Applicant: Humax Co., Ltd., Yongin-si, Gyeonggi-do 17040 (KR)
(72) Inventor: PARK, Sung Heum, 16975 Yongin-si, Gyeonggi-do (KR)
(74) Representative: Zardi, Marco

(57) **Abstract**

An image processing terminal in the media system comprises a receiving unit for receiving a control signal; and a processor for operating the image processing terminal in a specific mode according to the received control signal. A mode when the normal input is applied to a specific key differs that when the force input is applied to the specific key, modes differ depending on a sensing level of the force input, or the modes differ as the force input is applied to different keys, a first mode is changed to a second mode when the force input is applied to the specific key in the first mode, and a sensing level is calibrated to a first sensing level or a second sensing level, when an input applied to the specific key corresponds to an input between the first sensing level and the second sensing level.

## Description

### BACKGROUND

### 1. Field of the Invention

The present disclosure relates generally to a media system and a method for implementing a variety of modes using a force input.

### 2. Description of the Related Art

A set-top box is connected to a television, converts properly a video signal and a voice signal received from an external device and displays an image corresponding to the converted video and voice signal through the television.

The set-top box receives an IPTV signal, a cable TV signal, a satellite TV signal or a general signal for broadcasting, and the set-top box displays the received signal on the television.

The set-top box generally interoperates with a wired or wireless controller. A user remotely controls the set-top box with the remote controller.

Functions of the set-top box or the television are diversified as types of contents and services provided from an IPTV, a cable TV or a satellite TV have been diversified. The number of buttons or keys in the remote controller controlling the set-top box or the television has increased due to the diversification of the functions.

It is preferable to provide various contents and services to the user, but the user need to know a function of each button in the remote controller in order to fully enjoy the various contents and services provided.

It becomes difficult for the user to control the remote controller with keeping the user's eyes toward the television (blind control) because the remote controller has lots of buttons or keys. Additionally, there are many factors distracting user's view when the user controls the remote controller. For example, the user should look at the remote controller and select a relevant button whenever the user wants to properly control the remote controller.

A demand for a remote controller having few or no button has been on the rise. Since a conventional remote controller does not satisfy such demand, a system and method for controlling the remote controller minimizing the number of the buttons in the remote controller is needed while allowing the user to enjoy a variety of contents and services. With the remote controller having few or no button, the user may easily figure out how to use the remote controller and it also enables the user to perform the blind control when using the remote controller.

### SUMMARY

The invention has been made to address at least the disadvantages and problems described above, and to provide at least the advantage described below. An aspect of the invention provides a media system and a method for implementing a variety of modes using a force input, the media system driving different operation modes according to sense levels corresponding to an input applied to a key of a remote controller.

According to one embodiment of the invention, an image processing terminal, comprising: a receiving unit configured to receive a control signal including information about a normal input or a force input applied to a remote controller; and a processor configured to operate the image processing terminal in a specific mode according to the received control signal. Here, a mode when the normal input is applied to a specific key of the remote controller is different from a mode when the force input is applied to the specific key, modes differ depending on a sensing level of the force input applied to the specific key, or the modes differ according as the force input is applied to different keys, a first mode is changed to a second mode when the force input is applied to the specific key of the remote controller in the first mode, the force input means an input applied to the specific key of the remote controller with a higher pressure or a wider area than a pressure or an area in the normal input, and a sensing level corresponding to the normal input or the force input applied to the specific key is calibrated to a first sensing level or a second sensing level, when an input applied to the specific key corresponds to an input between the first sensing level and the second sensing level.

According to another embodiment of the invention, an image processing terminal, comprising: a receiving unit configured to receive a control signal including information about a normal input or a force input applied to a remote controller; and a processor configured to operate the image processing terminal in a specific mode according to the received control signal. Here, the image processing terminal implements two or more of a standby mode, an active standby mode or a deep standby mode, the implemented modes are changed according to a force input applied to a first key of the remote controller, the processor executes a second operation or a second screen, different from a first operation or a first screen in the normal input applied to a second key of the remote controller when a force input is applied to the second key, the force input means an input applied to corresponding key of the remote controller with a higher pressure or a wider area than a pressure or an area in the normal input, and an entity for notifying of the force input is visually outputted when the force input is applied to the corresponding key.

According to still another embodiment of the invention, an image processing terminal, comprising: a receiving unit configured to receive a control signal including information about a normal input or a force input applied to a remote controller; and a processor configured to operate the image processing terminal in a specific mode according to the received control signal. Here, the image processing terminal implements two or more of a standby mode, an active standby mode or a deep standby mode, the implemented modes are changed according to a force input corresponding to a first sensing level applied to a specific key of the remote controller, a function not related to the modes is executed according to a normal input or a force input corresponding to a second sensing level applied to the specific key, the force input means an input applied to corresponding key of the remote controller with a higher pressure or a wider area than a pressure or an area in the normal input, and the modes executed according to the force input are changed when software of the image processing terminal is upgraded.

According to one embodiment of the invention, a method for changing a mode in an image processing terminal, the method comprising: receiving a control signal including information about a normal input or a force input applied to a remote controller; and operating the image processing terminal in a specific mode according to the received control signal. Here, a mode when the normal input is applied to a specific key of the remote controller is different from a mode when the force input is applied to the specific key, modes differ depending on a sensing level of the force input applied to the specific key, or the modes differ according as the force input is applied to different keys, a first mode is changed to a second mode when the force input is applied to the specific key of the remote controller in the first mode, the force input means an input applied to the specific key of the remote controller with a higher pressure or a wider area than a pressure or an area in the normal input, and a sensing level corresponding to the normal input or the force input applied to the specific key is calibrated to a first sensing level or a second sensing level, when an input applied to the specific key corresponds to an input between the first sensing level and the second sensing level.

The invention provides a media system and a method for implementing a variety of modes using a force input. As a result, different modes may be implemented according to a normal input or a force input applied to the same key, and so user's convenience may be enhanced.

A remote controller has a simple key arrangement, thereby enhancing user's visibility.

### BRIEF DESCRIPTION OF DRAWINGS

The aspects, features, advantages and embodiments of the invention will be more apparent from the following detailed description taken in conjunction with reference to the accompanying drawings, in which:
FIG. 1 is a view illustrating a media system according to one embodiment of the invention;
FIG. 2 is a view illustrating schematically a remote controller according to one embodiment of the invention;
FIG. 3A to FIG. 3C are views illustrating a normal input and a force input according to one embodiment of the invention;
FIG. 4 is a view illustrating a sensing level corresponding to the normal input and the force input according to one embodiment of the invention;
FIG. 5 is a flowchart illustrating schematically an operation of a media system according to one embodiment of the invention;
FIG. 6 is a flowchart illustrating an operation process of the image processing terminal in the media system according to one embodiment of the invention;
FIG. 7A to FIG. 7C are views illustrating visually an operation mode activated depending on the sensing level according to one embodiment of the invention;
FIG. 8 is a flowchart illustrating a process of operating the image processing terminal according to another embodiment of the invention;
FIG. 9A and FIG. 9B are views illustrating an operation of the image processing terminal in FIG. 8;
FIG. 10 is a flowchart illustrating a process of operating an image processing terminal according to still another embodiment of the invention;
FIG. 11A to FIG. 11C are views illustrating visually different functions executed depending on the sensing level according to still another embodiment of the invention;
FIG. 12A and FIG. 12B are views illustrating an operation of the image processing terminal according to still another embodiment of the invention;
FIG. 13A and FIG. 13B are views illustrating visually the sensing level according to another embodiment of the invention;
FIG. 14 is a flowchart illustrating an operation of the image processing terminal according to still another embodiment of the invention;
FIG. 15A and FIG. 15B are views illustrating an operation of the image processing terminal in FIG. 14; and
FIG. 16 is a view illustrating schematically the image processing terminal according to one embodiment of the invention.

### DETAILED DESCRIPTION

In the present specification, an expression used in the singular encompasses the expression of the plural unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a part for processing at least one function or action and may be implemented as hardware, software, or a combination of hardware and software.

The invention relates to a media system including an image processing terminal and a remote controller for controlling the same. Here, the image processing terminal may be a display device, including a television, for displaying visually information or a set-top box for transmitting a variety of information to the display device. The image processing terminal is not limited as a specific device as long as it is a device for visually outputting data. For example, the image processing terminal may be the set-top box or the television having functions of the set-top box.

The remote controller of the invention includes at least one key, and provides a control signal including information about a sensing level of a key selected by a user to the image processing terminal. In this case, the image processing terminal may perform different operations according to the sensing level of the key. Here, the key of the remote controller may be implemented by hardware including dome key type, or implemented by software.

Hereinafter, various embodiments of the invention will be described in detail with reference to accompanying drawings.

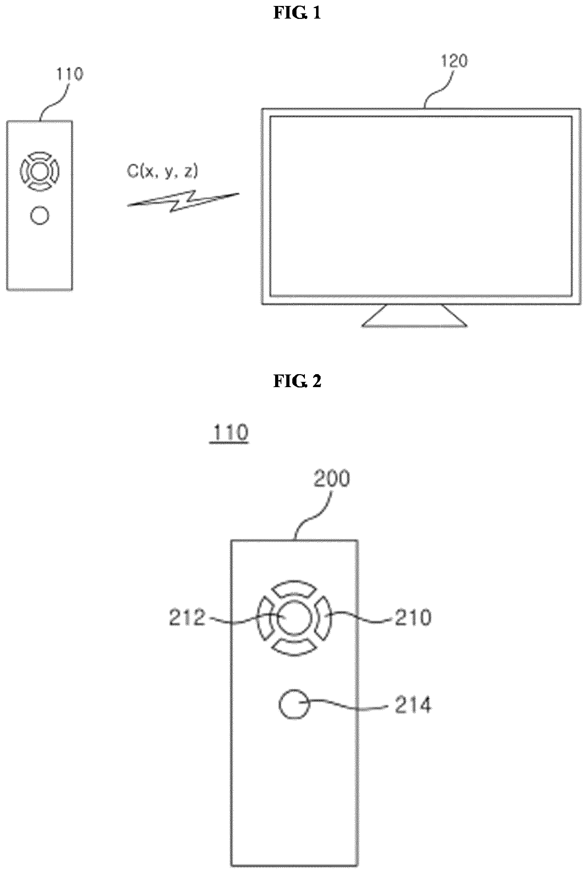

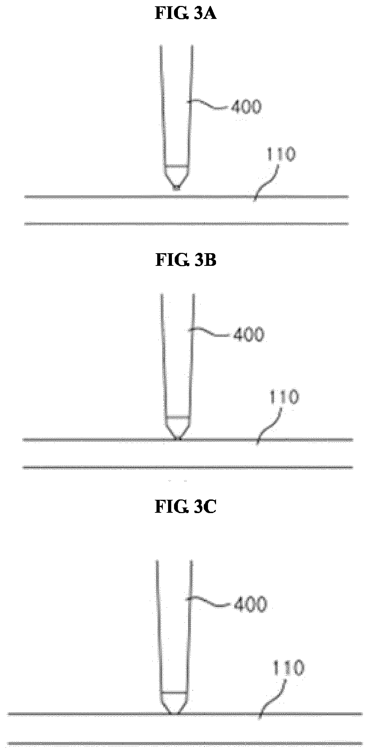

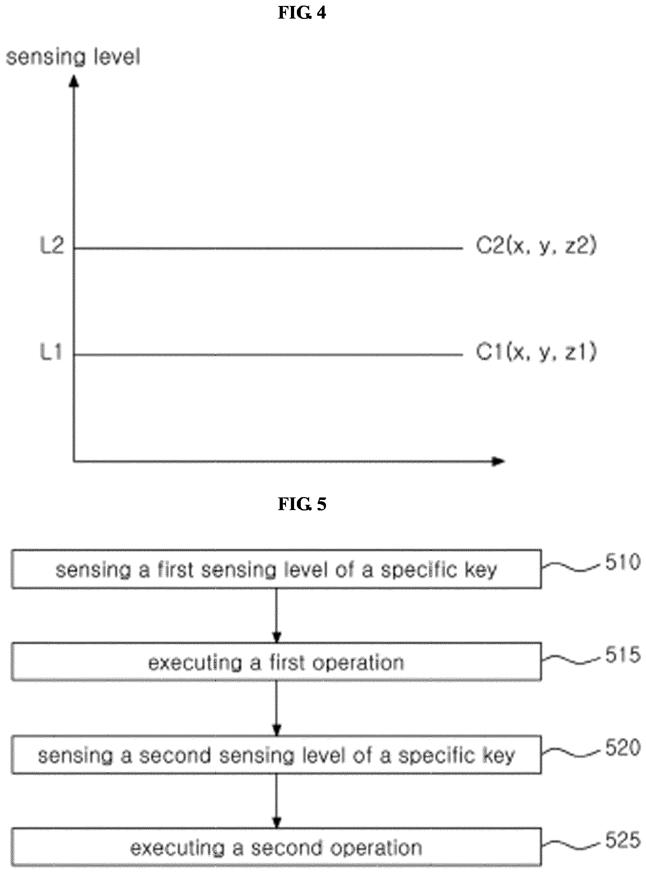

FIG. 1 is a view illustrating a media system according to one embodiment of the invention, and FIG. 2 is a view illustrating schematically a remote controller according to one embodiment of the invention. FIG. 3A to FIG. 3C are views illustrating a normal input and a force input according to one embodiment of the invention, and FIG. 4 is a view illustrating a sensing level corresponding to the normal input and the force input according to one embodiment of the invention.

In FIG. 1, the media system of the present embodiment includes a remote controller 110 and an image processing terminal 120.

The remote controller 110 transmits a control signal in response to an input applied to a key by a user to the image processing terminal 120.

FIG. 2 shows an external appearance of the remote controller 110 according to the invention. In FIG. 2, the remote controller 110 may include a body 200 and a plurality of keys formed on the body 200. Here, the keys formed on the body 200 may include a navigation key 210 including up, down, left, or right directional keys, a function key 214 for performing a variety of operations such as an esc key and a home key, etc., and a decision key 212 for performing an operation of an OK key, etc. Of course, various keys other than the navigation key 210, the decision key 212 and the function key 214 may exist in the remote controller 110. The various keys may be classified as the navigation key 210, the decision key 212 and the function key 214.

The remote controller 110 according to the invention supports plural inputs about one key. More specifically, the remote controller 110 provides a normal input and a force input about one or more keys therein.

Here, the normal input means a general input pressed or touched by a user. For example, the normal input may be an input when a touch means 400 touches a specific key of the remote controller 110 as shown in FIG. 3B, under the condition that the touch means 400 does not touch the specific key of the remote controller 110 as shown in FIG. 3A.

The force input means an input to the key when the key is pressed or touched with a higher pressure or a wider area than those of the normal input. The force input may be an input applied to the key as shown in FIG. 3C when the key is continuously touched or pressed with a higher pressure or a wider area after the touch means 400 touches or presses the key as shown in FIG. 3B under the condition that the touch means 400 does not touch or press the key as shown in FIG. 3A.

The sensing level differs according to the normal input or the force input even if the user touches or presses the same key. As a result, the remote controller 110 may transmit different control signals to the image processing terminal 120 in response to the sensing level corresponding to the normal input or the force input, as shown in FIG. 4.

That is, the remote controller 110 may transmit different control signals to the image processing terminal 120 when the user applies the normal input to one key or when the user applies the force input to the one key. Accordingly, functions related to plural operations of the image processing terminal 120 may be set to at least one of the keys of the remote controller 110.

For example, the remote controller 110 may transmit different control signals to the image processing terminal 120 in response to the pressure or the area applied to a specific key of the remote controller 110 by using the touch means 400 such as a finger. Particularly, the remote controller 110 may transmit a first control signal including key information concerning a specific key and a first sensing level corresponding to the normal input to the image processing terminal 120, when the user applies the normal input to the specific key of the remote controller 110. The remote controller 110 may transmit a second control signal including the key information concerning the specific key and a second sensing level corresponding to the force input to the image processing terminal 120, when the user applies the force input to the specific key of the remote controller 110.

As a result, the image processing terminal 120 may perform different operations/functions according to the normal input or the force input, even if the user touches or presses the same key.

As described above, the remote controller 110 may transmit the control signal including the key information concerning the specific key selected by the user and the sensing level corresponding to the pressure or the area applied to the specific key to the image processing terminal 120.

In one embodiment, the remote controller 110 may transmit the control signal including coordinate information to the image processing terminal 120.

For example, the information concerning the specific key selected by the user may be included in the control signal where it is expressed in a coordinate (x, y). The sensing level may be included in the control signal where it is expressed in a coordinate (z). That is, the remote controller 110 may transmit the control signal including a coordinate (x, y, z) to the image processing terminal 120.

Accordingly, the remote controller 110 may transmit a first control signal C1 including a coordinate (x, y, z1) to the image processing terminal 120, when the user presses or touches the specific key of the remote controller 110 with a first sensing level. The remote controller 110 may transmit a second control signal C2 including a coordinate (x, y, z2) to the image processing terminal 120, when the user presses or touches the specific key of the remote controller 110 with a second sensing level.

As a result, the image processing terminal 120 may perform different operations according to the sensing level, even if the user presses or touches the same key.

For example, the image processing terminal 120 may output a broadcasting program guide according to a first sensing level, and output a recommendation program list according to a second sensing level.

In another embodiment, the force input of the remote controller 110 may be divided into a plurality of force inputs. For example, an input of the remote controller 110 may be divided into the normal input, a first force input and a second force input. The remote controller 110 may transmit the control signal including the sensing level to the image processing terminal 120, the sensing level differing depending on the normal input, the first force input and the second force input.

More specifically, it is assumed that the user applies the normal input, the first force input or the second force input to a power key of the remote controller 110. The remote controller 110 may transmit a first control signal including a first sensing level according as the normal input is applied to the power key. The remote controller 110 may transmit a second control signal including a second sensing level according as the first force input is applied to the power key. The remote controller 110 may transmit a third control signal including a third sensing level according as the second force input is applied to the power key.

The image processing terminal 120 may operate in a standby mode when it executes a power control function according to the control signal including the first sensing level.

The image processing terminal 120 may execute the power control function in an active standby mode according to the second sensing level, when it executes the same power control function depending on the second control signal including the second sensing level.

The image processing terminal 120 may execute the power control function in a deep standby mode according to the third sensing level, when it executes the power control function depending on the third control signal including the third sensing level.

That is, the image processing terminal 120 may operate in different modes according to the sensing levels, when it executes the same function according to the control signals.

The modes may be matched with different keys, respectively. In this case, the image processing terminal 120 may implement a variety of the modes according to the force input applied to the keys.

Accordingly, the user may operate a specific function in different modes by changing the pressure or the area applied to the key through one touching or pressing of the key of the remote controller 110, when he controls the remote controller 110 to operate a specific operation in different modes. That is, multiple touching or pressing of the key in the remote controller 110 is not needed.

In above embodiment, the sensing level corresponds to the pressure or the area applied to the specific key. However, the sensing level may correspond to a combination of plural information.

For example, the remote controller 110 may transmit a control signal including a sensing level corresponding to the pressure applied to the specific key by the user and a sensing level corresponding to the area applied to the specific key by the user to the image processing terminal 120. In this case, the control signal may be expressed with four dimensional coordinate information (x,y,z,t).

In brief, one or more parameters may be set for the sensing level included in the control signal in accordance with the touching or pressing of the key of the remote controller 110.

Accordingly, the image processing terminal 120 may execute different operations according to the sensing level of the specific key.

In the conventional remote controller, an input to the key includes only the normal input. As a result, only one operation is matched with one key, and thus the remote controller should include many keys. Accordingly, the remote controller has become complicated and caused inconvenience to users.

Whereas, the remote controller 110 of the invention provides different sensing levels corresponding to the normal input and the force input, and thus a plurality of functions not one function may be matched with one key.

As a result, the remote controller 110 of the invention may have few or no key compared with the conventional remote controller, and so the structure of the remote controller 110 of the invention is simpler than that of the conventional remote controller. Accordingly, user's visibility is enhanced and user's convenience may be enhanced in controlling the remote controller 110

Additionally, the remote controller 110 transmits the control signal including the coordinate information having key information in response to the touching or pressing of the specific key and the sensing level to the image processing terminal 120. In this case, the image processing terminal 120 may perform different operations according to software installed therein, even if the remote controller 110 transmits the same coordinate information to the image processing terminal 120.

Now referring to FIG. 1, the image processing terminal 120 operates according to the control signal of the remote controller 110 while it is connected to the remote controller 110 via wireless communication.

That is, the image processing terminal 120 may perform different operations according to the sensing level of the specific key of the remote controller 110 or execute a specific function depending on the mode corresponding to the sensing level.

Hereinafter, this will be described in detail with reference to accompanying drawings.

FIG. 5 is a flowchart illustrating schematically an operation of a media system according to one embodiment of the invention.

For example, it is assumed that the normal input is applied to a specific key of the remote controller 110. In a step of 510, the remote controller 110 may transmit a first control signal including key information about the specific key and a first sensing level corresponding to the normal input applied to the specific key to the image processing terminal 120.

As described above, the sensing level differs according to whether the input applied to the key of the remote controller 110 corresponds to the normal input or the force input. Accordingly, the remote controller 110 may transmit the control signal including the sensing level to the image processing terminal 120, the sensing level differing depending on at least one of the pressure or the area applied to the key though the user touches or presses the same key.

In a step of S515, the image processing terminal 120 may execute a first operation according to the first control signal.

In a step of 520, the remote controller 110 transmits a second control signal C(x, y, z2) including key information about the specific key and a second sensing level to the image processing terminal 120, in the event that the user touches or presses the specific key with a higher pressure or a wider area.

In a step of 525, the image processing terminal 120 may execute a second operation according to the second control signal.

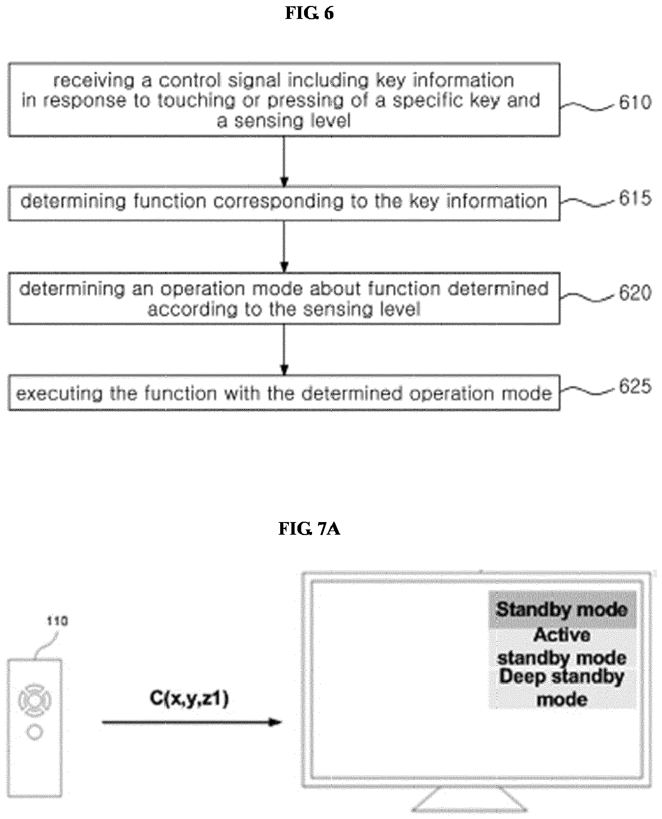

FIG. 6 is a flowchart illustrating an operation process of the image processing terminal in the media system according to one embodiment of the invention, and FIG. 7A to FIG. 7C are views illustrating visually an operation mode activated depending on the sensing level according to one embodiment of the invention. Hereinafter, a process of performing different operations in the image processing terminal 120 according to the normal input or the force input applied to a specific key of the remote controller 110 by the user will be described in detail.

In a step of 610, the image processing terminal 120 receives a control signal in response to an input applied to a specific key from the remote controller 110.

Here, the control signal includes key information in response to the touching or pressing of the specific key by the user and a sensing level which differs according to the pressure or the area applied to the specific key by the user.

The control signal may include three or more dimensional coordinate information. First axis coordinate information (e.g. x-axis coordinate information) and second axis coordinate information (e.g. y-axis coordinate information) of the coordinate information may be a coordinate of the specific key pressed or touched by the user. z-axis coordinate information of the coordinate information may be information concerning the sensing level.

In a step of 615, the image processing terminal 120 extracts the key information from the control signal and determines a function corresponding to the extracted key information.

In a step of 620, the image processing terminal 120 determines an operation mode about the determined function by using the sensing level included in the control signal.

In a step of 625, the image processing terminal 120 executes the determined function in the determined operation mode.

More particularly, it is assumed that the user controls on/off of a power of the image processing terminal 120 by controlling a power key of the remote controller 110. For understanding and convenience for description, it is assumed that the power key of the remote controller 110 is controlled while a power of the image processing terminal 120 has on state.

For example, the remote controller 110 may transmit a first control signal including a first sensing level to the image processing terminal 120, when the user applies the normal input to the power key of the remote controller 110. In this case, the image processing terminal 120 may change a mode for the power of the image processing terminal 120 into a general standby mode according to the first control signal.

Here, the standby mode means a mode in which the image processing terminal 120 has standby state. For example, a function related to a television or functions pertaining to playing of contents in the image processing terminal 120 may be turned off in the standby mode.

However, the remote controller 110 may transmit a second control signal including a second sensing level to the image processing terminal 120, when a first force input is applied to the power key of the remote controller by the user. In this case, the image processing terminal 120 may change the mode for the power of the image processing terminal 120 into an active standby mode according to the second control signal. Here, in the active standby mode, an internal circuit of the image processing terminal 120, which waits to receive a signal via wireless/wired communication, is activated.

The remote controller 110 may transmit a third control signal including a third sensing level to the image processing terminal 120, when a second force input is applied to the power key of the remote controller by the user. In this case, the image processing terminal 120 may change the mode for the power of the image processing terminal 120 into a deep standby mode according to the third control signal.

Here, in the deep standby mode, the image processing terminal 120 drives only a basic element such as a micom, etc., and turns off the other elements. As a result, connection between the image processing terminal 120 and a different client is cut off in the deep standby mode.

In addition, connection between the image processing terminal 120 and the television may be cut off if the image processing terminal is connected to the television. In the deep standby mode, the image processing terminal 120 may keep a voltage of 0.5 or less.

As described above, the image processing terminal 120 may determine the operation mode according to the sensing level included in the control signal for control of the power of the remote controller 110, and operate a specific function in the determined operation mode.

That is, even if the user touches or presses the same key of the remote controller 110, the image processing terminal 120 may execute operations corresponding to the same key in different operation modes, according to the normal input or the force input applied to the same key.

If a plurality of modes is provided about the specific key of the remote controller 110, the user can not identify easily whether the normal input or the force input is applied to the key of the remote controller 110.

Accordingly, in the event that the specific key of the remote controller 110 is touched or pressed, a plurality of operation modes set for the specific key are outputted as shown in FIG. 7A to FIG. 7C. Afterward, the image processing terminal 120 may output the operation mode with visual difference from the other operation mode according to the sensing level corresponding to at least one of the pressure or the area applied to the key by the user. As a result, the user can easily identify the operation mode activated when the user touches or presses the specific key.

If a plurality of sensing levels exist, it is difficult to apply an apply to a specific key of the remote controller 110 with accurately identifying a first sensing level and a second sensing level when the user touches or presses the specific key. Accordingly, the remote controller 110 or the image processing terminal 120 may calibrate an input between the first sensing level and the second sensing level when the user applies the input between the first sensing level and the second sensing level to the specific key. The remote controller 110 or the image processing terminal 120 may calibrate the an input to the sensing level having smaller difference from a sensing level corresponding to the input of the first sensing level and the second sensing level, when the user applies the input between the first sensing level and the second sensing level to the specific key.

That is, in the event that the user applies the normal input to the power key of the remote controller 110, the image processing terminal 120 may output the standby mode corresponding to the normal input with visual difference from the other standby modes as shown in FIG. 7A.

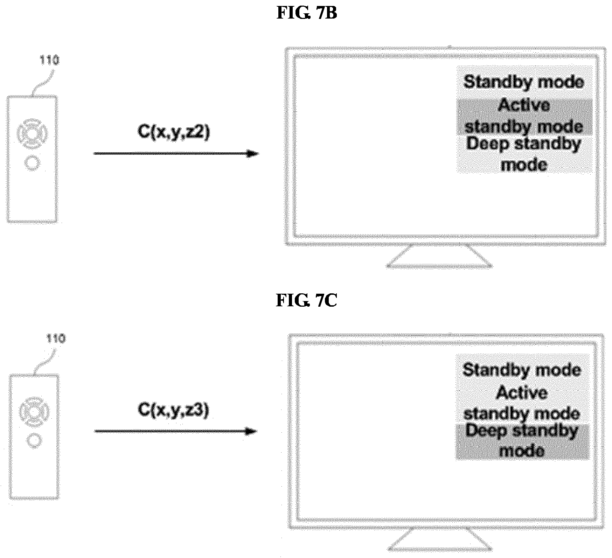

In the event that the user applies the first force input to the power key of the remote controller 110, the image processing terminal 120 may output the active standby mode corresponding to the first force input with visual difference from the other standby modes(general standby mode, deep standby mode) as shown in FIG. 7B. The first force input means an input applied to the power key with a higher pressure or a wider area than a pressure or an area in the normal input.

In the event that the user applies the second force input to the power key of the remote controller 110, the image processing terminal 120 may output the deep standby mode corresponding to the second force input with visual difference from the other standby modes(general standby mode, active standby mode) as shown in FIG. 7C. The second force input means an input applied to the power key with a higher pressure or a wider area than a pressure or an area in the first force input.

In short, the image processing terminal 120 may drive in different modes according to whether the normal input or the force input is applied to the specific key of the remote controller.

If software of the remote controller 110 or the image processing terminal 120 is upgraded, operation modes driven in response to the normal input or the force input applied to the specific key may be changed from operation modes before the upgrading.

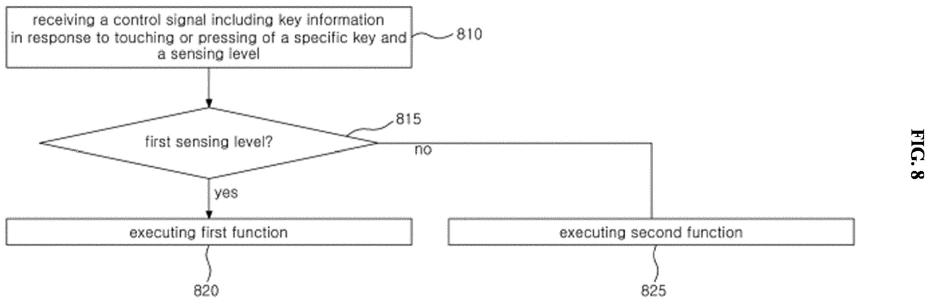

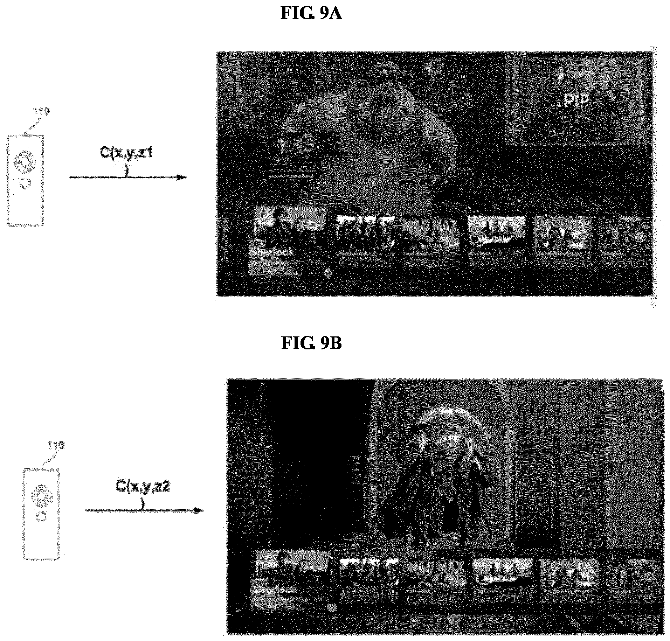

FIG. 8 is a flowchart illustrating a process of operating the image processing terminal according to another embodiment of the invention, and FIG. 9A and FIG. 9B are views illustrating an operation of the image processing terminal in FIG. 8.

In a step of 810, the image processing terminal 120 receives the control signal from the remote controller 110. Here, the control signal may include the key information in response to the touching or pressing of the specific key of the remote controller 110 by the user and the sensing level determined depending on at least one of the pressure or the area applied to the specific key, as described above.

In a step of 815, the image processing terminal 120 determines whether or not the sensing level included in the control signal corresponds to a first sensing level or a second sensing level.

In a step of 820, the image processing terminal 120 executes a first function in response to the key information included in the control signal, when the sensing level corresponds to the first sensing level,

In a step of 825, the image processing terminal 120 executes a second function in response to the key information included in the control signal, when the sensing level corresponds to the second sensing level.

The normal input and the force input may be applied to one or more keys in the remote controller 110. In this case, a plurality of functions may be set to the specific key of the remote controller 110.

Accordingly, the image processing terminal 120 may execute different operation according to the normal input or the force input included in the control signal received from the remote controller 110, even if the same key is touched or pressed.

For example, it is assumed that a specific contents list was outputted. The image processing terminal 120 performs different operations according to the normal input or the force input applied to the ok key by the user. Hereinafter, this will be described.

In the event that the user applies the normal input to the ok key of the remote controller 110 while a specific contents entity in the specific contents list is focused, the specific contents entity may be played as shown in FIG. 9A.

In the event that the user applies the force input to the ok key of the remote controller 110 while the specific contents entity is focused, the image processing terminal 120 may play the specific contents entity in a picture-in-picture PIP as shown in FIG. 9B.

Briefly, a plurality of functions may be set about one key in the remote controller 110, according to the sensing level. As a result, the remote controller 110 need not include many keys, thereby enhancing user's visibility about the keys in the remote controller 110.

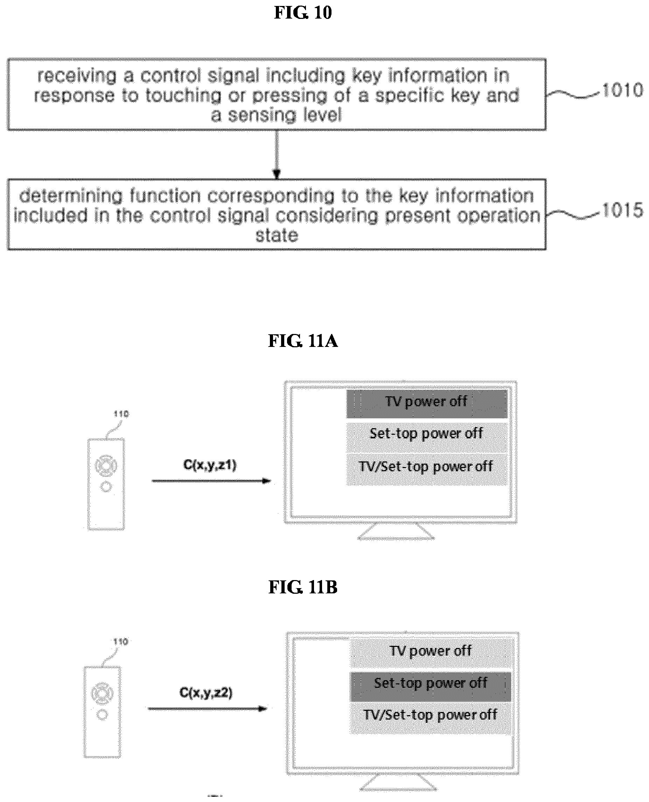

FIG. 10 is a flowchart illustrating a process of operating an image processing terminal according to still another embodiment of the invention, and FIG. 11A to FIG. 11C are views illustrating visually different functions executed depending on the sensing level according to still another embodiment of the invention.

In a step of 1010, the image processing terminal 120 receives the control signal from the remote controller 110. Here, the control signal may include the key information in response to the touching or pressing of the specific key of the remote controller 110 by the user and the sensing level determined depending on at least one of the pressure or the area applied to the specific key, as described above.

In a step of 1015, the image processing terminal 120 determines a function corresponding to the key information included in the control signal, considering the present operation state of the image processing terminal 120.

For example, it is assumed that a power of the image processing terminal 120 has on state, and the normal input or the force input is applied to the power key of the remote controller 110.

Since the power of the image processing terminal 120 has on state, the image processing terminal 110 determines a function corresponding to the key information as a power off function according as the power key is touched or pressed.

In this case, the image processing terminal 120 may determine change of a mode for controlling the power according to the sensing level included in the control signal. That is, the image processing terminal 120 may change its mode into the general standby mode, in response to a first sensing level. The image processing terminal 120 may change its mode into the active standby mode, in response to a second sensing level. The image processing terminal 120 may change its mode into the deep standby mode, in response to a third sensing level.

For another example, the image processing terminal 120 may determine the function corresponding to the key information as the power off function when the power key of the remote controller 110 is touched or pressed, because its power has on state.

Here, the image processing terminal 120 may output a function, which differs depending on the sensing level varied according as the specific key of the remote controller is touched or pressed, on a screen so that the user can easily recognize the function.

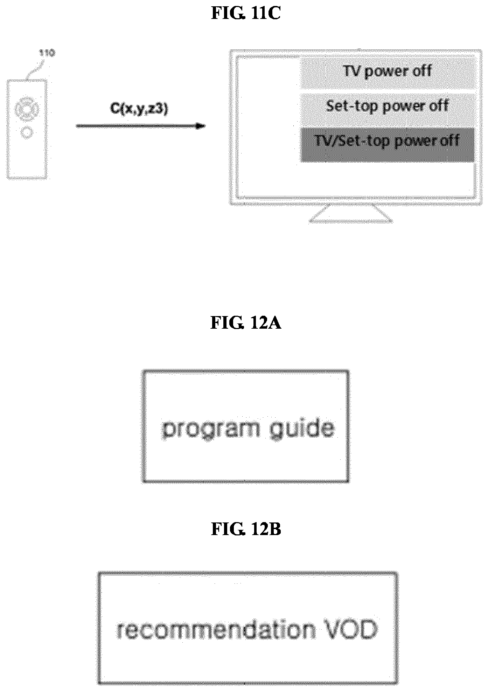

That is, the image processing terminal 120 may turn off only a power of an element pertaining to a television function when the sensing level corresponds to the first sensing level as shown in FIG. 11A, and turn off only a power of an element related to a set-top box function when the sensing level corresponds to the second sensing level as shown in FIG. 11B. The image processing terminal 120 may turn off simultaneously the power of the element pertaining to the television function and the power of the element related to the set-top box function when the sensing level corresponds to the third sensing level as shown in FIG. 11C.

As described above, the image processing terminal 120 may execute different operations about the same key, according to the control signal including the key information in response to the touching or pressing of the specific key of the remote controller 110 and the sensing level corresponding to at least one of the pressure or the area applied to the specific key.

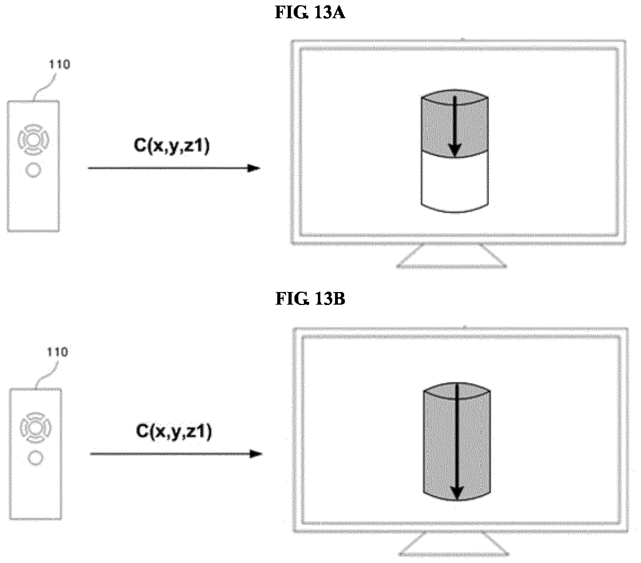

FIG. 12A and FIG. 12B are views illustrating an operation of the image processing terminal according to still another embodiment of the invention, and FIG. 13A and FIG. 13B are views illustrating visually the sensing level according to another embodiment of the invention.

For example, the remote controller 110 may transmit a first control signal including three dimensional coordinate information having a first sensing level to the image processing terminal 120, when the user touches or presses a specific key of the remote controller 110 by the first sensing level. Accordingly, the image processing terminal 120 may output a program guide according to the first control signal as shown in FIG. 12A.

The remote controller 110 may transmit a second control signal including three dimensional coordinate information having a second sensing level to the image processing terminal 120, when the user touches or presses the specific key by a higher pressure or a wider area than a pressure or an area in the first sensing level.

Accordingly, the image processing terminal 120 may output a recommendation VOD list according to the second control signal as shown in FIG. 12B.

That is, the image processing terminal 120 may execute different applications or screens according to the sensing level about the specific key of the remote controller 110.

If a plurality of modes exists about the specific key of the remote controller 110, the user can't accurately recognize whether he applies the normal input or the force input.

Accordingly, the image processing terminal 120 may output an extra entity so that the user can easily recognize an input corresponding to the sensing level.

For example, the image processing terminal 120 may display an entity pertaining to the normal input as shown in FIG. 13A, when the normal input is applied to the specific key. The image processing terminal 120 may display an entity related to the force input as shown in FIG. 13B, when the force input is applied to the specific key.

As shown in FIG. 13A and FIG. 13B, the image processing terminal 120 may visually output degree/ratio of the sensing level about the specific key so that the user can easily recognize whether an input applied to the specific key corresponds to the normal input or the force input.

Of course, the image processing terminal 120 may differently output a visual entity according to the sensing level of the specific key.

For another example, the image processing terminal 120 may not visually output an entity pertaining to the normal input, in the event that the sensing level of the remote controller 110 corresponds to the normal input. The image processing terminal 120 may visually output an entity for notifying of the force input, in the event that the sensing level of the remote controller 110 corresponds to the force input. A mode corresponding to the force input may be outputted with entity, when the entity is visually outputted.

Accordingly, the user may verify whether the normal input or the force input is applied to the specific key by seeing only the image processing terminal 120, without viewing the remote controller 110.

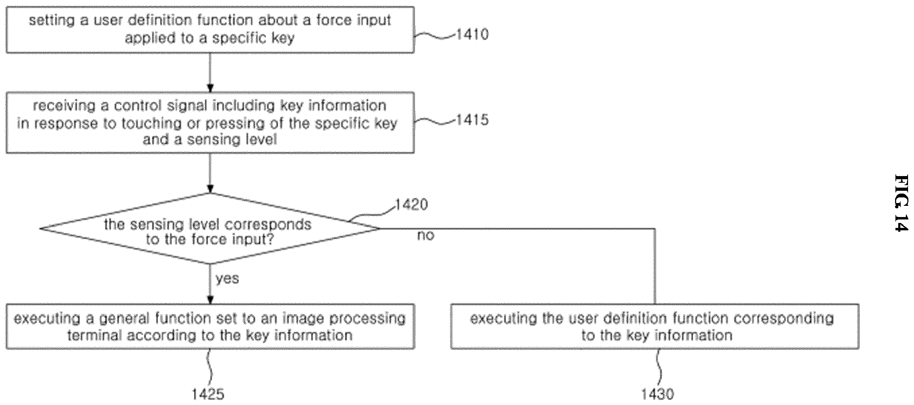

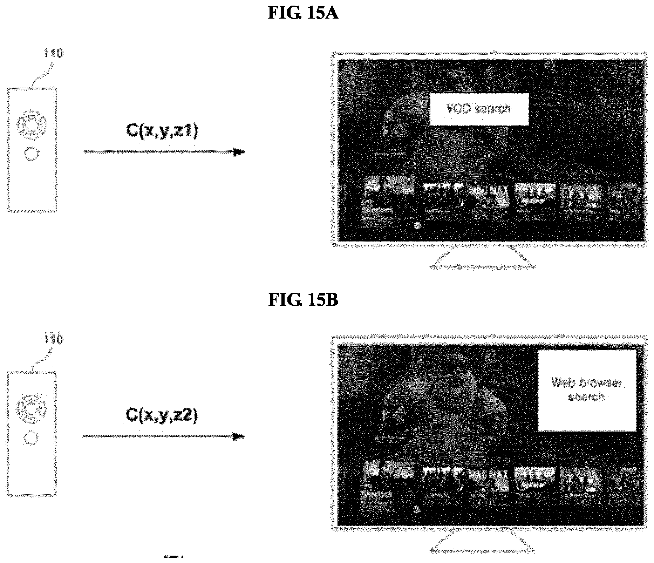

FIG. 14 is a flowchart illustrating an operation of the image processing terminal according to still another embodiment of the invention, and FIG. 15A and FIG. 15B are views illustrating an operation of the image processing terminal in FIG. 14.

In a step of 1410, the image processing terminal 120 sets a user definition function about the force input to the specific key of the remote controller 110.

In a step of 1415, the image processing terminal 120 receives the control signal including the key information and the sensing level corresponding to at least one the pressure or the area applied to the specific key from the remote controller 110, when the user touches or presses the specific key of the remote controller 110.

In a step of 1420, the image processing terminal 120 determines whether or not the sensing level corresponds to the force input.

In a step of 1425, the image processing terminal 120 executes a general function provided by itself according to the key information, when the sensing level does not correspond to the force input.

In a step of 1430, the image processing terminal 120 executes the user definition function defined in advance by the user, according to the key information, when the sensing level corresponds to the force input.

For example, it is assumed that the image processing terminal 120 are playing specific contents, and the user definition function, such as execution of a web browser, is set about the force input applied to a search key of the remote controller 110.

The image processing terminal 120 may provide a search function provided basically therein, when the normal input is applied to the search key, i.e. the control signal includes the first sensing level. The image processing terminal 120 may execute a VOD search as shown in FIG. 15A when the normal input is applied to the search key.

The image processing terminal 120 may execute an "web browser execution" function as the preset user definition function about the force input applied to the search key as shown in FIG. 15B, when the force input is applied to the search key, i.e. the control signal includes the second sensing level.

That is, the user can set a desired user definition function about the force input applied to the specific key of the remote controller.

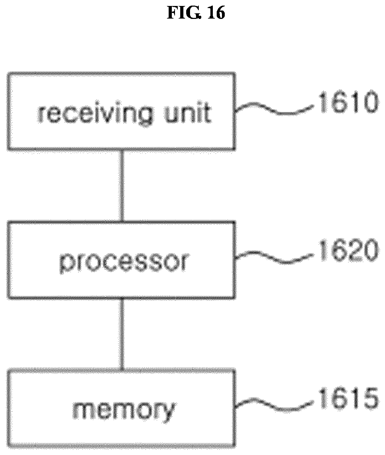

FIG. 16 is a view illustrating schematically the image processing terminal according to one embodiment of the invention.

In FIG. 16, the image processing terminal 120 of the present embodiment includes a receiving unit 1610, a memory 1615 and a processor 1620.

The receiving unit 1610 receives the control signal including the key information in response to the touching or pressing of a specific key of the remote controller 110 and the sensing level corresponding to at least one of the pressure or the area applied to the specific key.

The memory 1615 stores a variety of applications, algorithms, etc. needed for performing different operations according to the sensing level corresponding to the touching or pressing of the specific key of the remote controller 110.

The processor 1620 controls elements (e.g. the receiving unit 1610, the memory 1615, etc.) of the image processing terminal 120.

The processor 1620 executes different operations according to the sensing level included in the control signal.

As described above, the processor 1620 may execute different functions in response to the key information, according to the sensing level included in the control signal.

That is, the processor 1620 may determine whether an input applied to the specific key is the normal input or the force input according to the sensing level, and execute different operations depending on the normal input or the force input.

In another embodiment, the processor 1620 may determine an operation mode in response to the key information corresponding to the sensing level, and execute a specific function in the determined operation mode.

In still another embodiment, the processor 1620 may execute a basic operation (function) provided by the image processing terminal 120 itself depending on the specific key, when the normal input is applied to the specific key. The processor 1620 may execute the user definition function (operation) defined in advance by the user according to the specific key, when the force input is applied to the specific key.

As described above, the processor 1620 may execute different operations (functions) according to the sensing level as to whether the normal input or the force input is applied to the specific key of the remote controller 110. Here, the processor 1620 may determine corresponding sensing level as the sensing level about the specific key, when the corresponding sensing level is not changed continuously during a predetermined period of time.

Components in the embodiments described above can be easily understood from the perspective of processes. That is, each component can also be understood as an individual process. Likewise, processes in the embodiments described above can be easily understood from the perspective of components.

Also, the technical features described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the invention or can be a type of medium known to and used by the skilled person in the field of computer software. Examples of a computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc. Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the invention, and vice versa.

The embodiments of the invention described above are disclosed only for illustrative purposes. A person having ordinary skill in the art would be able to make various modifications, alterations, and additions without departing from the spirit and scope of the invention, but it is to be appreciated that such modifications, alterations, and additions are encompassed by the scope of claims set forth below.

### [Description of reference numbers]

- 110 :: remote controller
- 120 :: image processing unit

## Claims

1. An image processing terminal, comprising:
a receiving unit configured to receive a control signal including information about a normal input or a force input applied to a remote controller; and
a processor configured to operate the image processing terminal in a specific mode according to the received control signal,
wherein a mode when the normal input is applied to a specific key of the remote controller is different from a mode when the force input is applied to the specific key, modes differ depending on a sensing level of the force input applied to the specific key, or the modes differ according as the force input is applied to different keys, a first mode is changed to a second mode when the force input is applied to the specific key of the remote controller in the first mode,
the force input means an input applied to the specific key of the remote controller with a higher pressure or a wider area than a pressure or an area in the normal input, and
a sensing level corresponding to the normal input or the force input applied to the specific key is calibrated to a first sensing level or a second sensing level, when an input applied to the specific key corresponds to an input between the first sensing level and the second sensing level.

2. The image processing terminal of claim 1, wherein the modes include two or more of a standby mode, an active standby mode or a deep standby mode.

3. The image processing terminal of claim 1, wherein the processor visually outputs information concerning the changed mode when the force input is applied to the specific key of the remote controller.

4. The image processing terminal of claim 1, wherein the control signal includes three or more dimensional coordinate,
and wherein the processor determines a coordinate of the specific key of the remote controller by using a first axis coordinate information and a second axis coordinate information, and determines whether the normal input or the force input is applied to the specific key of the remote controller by using a third axis coordinate information.

5. The image processing terminal of claim 1, wherein the sensing level corresponds to the force input includes a plurality of sensing levels.

6. An image processing terminal, comprising:
a receiving unit configured to receive a control signal including information about a normal input or a force input applied to a remote controller; and
a processor configured to operate the image processing terminal in a specific mode according to the received control signal,
wherein the image processing terminal implements two or more of a standby mode, an active standby mode or a deep standby mode,
the implemented modes are changed according to a force input applied to a first key of the remote controller, the processor executes a second operation or a second screen, different from a first operation or a first screen in the normal input applied to a second key of the remote controller when a force input is applied to the second key,
the force input means an input applied to corresponding key of the remote controller with a higher pressure or a wider area than a pressure or an area in the normal input, and
an entity for notifying of the force input is visually outputted when the force input is applied to the corresponding key.

7. The image processing terminal of claim 6, wherein the control signal includes three or more dimensional coordinate,
and wherein the processor determines a coordinate of the corresponding key of the remote controller by using a first axis coordinate information and a second axis coordinate information, and determines whether the normal input or the force input is applied to the corresponding key of the remote controller by using a third axis coordinate information.

8. The image processing terminal of claim 6, wherein the processor visually outputs information about the changed mode or a changed operation when the force input is applied to the corresponding key of the remote controller.

9. An image processing terminal, comprising:
a receiving unit configured to receive a control signal including information about a normal input or a force input applied to a remote controller; and
a processor configured to operate the image processing terminal in a specific mode according to the received control signal,
wherein the image processing terminal implements two or more of a standby mode, an active standby mode or a deep standby mode,
the implemented modes are changed according to a force input corresponding to a first sensing level applied to a specific key of the remote controller, a function not related to the modes is executed according to a normal input or a force input corresponding to a second sensing level applied to the specific key,
the force input means an input applied to corresponding key of the remote controller with a higher pressure or a wider area than a pressure or an area in the normal input, and
the modes executed according to the force input are changed when software of the image processing terminal is upgraded.

10. A method for changing a mode in an image processing terminal, the method comprising:
receiving a control signal including information about a normal input or a force input applied to a remote controller; and
operating the image processing terminal in a specific mode according to the received control signal,
wherein a mode when the normal input is applied to a specific key of the remote controller is different from a mode when the force input is applied to the specific key, modes differ depending on a sensing level of the force input applied to the specific key, or the modes differ according as the force input is applied to different keys, a first mode is changed to a second mode when the force input is applied to the specific key of the remote controller in the first mode,
the force input means an input applied to the specific key of the remote controller with a higher pressure or a wider area than a pressure or an area in the normal input, and
a sensing level corresponding to the normal input or the force input applied to the specific key is calibrated to a first sensing level or a second sensing level, when an input applied to the specific key corresponds to an input between the first sensing level and the second sensing level.
